## Europäisches Patentamt
## European Patent Office
## Office européen des brevets

(19)

(11) Veröffentlichungsnummer : **0 070 405**
**B1**

(12)

# EUROPÄISCHE PATENTSCHRIFT

(45) Veröffentlichungstag der Patentschrift :
17.10.84

(51) Int. Cl.³ : **B 60 T 15/42**

(21) Anmeldenummer : **82105535.7**

(22) Anmeldetag : **24.06.82**

(54) **Beschleuniger für Steuerventile, insbesondere Dreidrucksteuerventile von Schienenfahrzeug-Druckluftbremsanlagen.**

(30) Priorität : **14.07.81 DE 3127774**

(43) Veröffentlichungstag der Anmeldung :
**26.01.83 Patentblatt 83/04**

(45) Bekanntmachung des Hinweises auf die Patenterteilung : **17.10.84 Patentblatt 84/42**

(84) Benannte Verfragsstaaten :
**CH DE FR GB LI**

(56) Entgegenhaltungen :
EP-A- 0 017 260
WO-A-   /013 93
DE-A- 2 651 377
DE-B- 1 236 551
DE-B- 1 276 681
DE-B- 2 165 092
DE-B- 2 165 144
DE-C-   967 165
DE-C-   969 085
FR-A- 2 411 740
US-A- 4 026 609
US-A- 4 073 544
US-A- 4 145 090
US-A- 4 175 792

(73) Patentinhaber : **Knorr-Bremse GmbH**
**Moosacher Strasse 80**
**D-8000 München 40 (DE)**

(72) Erfinder : **Huber, Johann**
**Ohlmüllerstrasse 14**
**D-8000 München 90 (DE)**

**Beschreibung**

Die Erfindung bezieht sich auf einen Beschleuniger für Steuerventile, insbesondere Dreidrucksteuerventile von Schienenfahrzeug-Druckluftbremsanlagen, welcher den im Gattungsbegriff des Anspruches 1 angeführten Merkmalen entspricht, wobei die Steuerventile also einen den Hauptluftleitungsdruck zu Bremsbeginn absenkenden Ansprung-Beschleuniger mit einer Übertragkammer aufweisen.

Ein derartiger Beschleuniger bzw. ein mit einem derartigen Beschleuniger ausgestattes Dreidrucksteuerventil ist aus der DE-OS 2 651 377 bekannt. Der Ansprung-Beschleuniger ist nach dieser DE-OS nur mit dem Einlaßventil und dem Absperrventil ausgestattet, das Auslaßventil ist dort weggelassen. Gemäß DE-PS 967 165 ist es jedoch auch bekannt, den in ein Dreidrucksteuerventil integrierten Ansprung-Beschleuniger zusätzlich zu dem Einlaßventil mit einem Auslaßventil gemäß dem Gattungsbegriff des Anspruches 1 auszustatten.

Nach der DE-OS 2 651 377 ist der Beschleuniger mit dem Ansprung-Beschleuniger baulich kombiniert, wobei das vom Hauptluftleitungsdruck entgegen dem Bezugskammerdruck beaufschlagbare Kolbenglied auf das Absperrventil einwirkt, das Absperrventil also zugleich die mit dem Kolbenglied gekoppelte Ventileinrichtung darstellt. Dieser bekannte Beschleuniger ist mit dem Mangel behaftet, daß das Auslaßventil bzw. die Ventileinrichtung zusätzlich zum Kolbenglied mit einem kleinen Kolben gekoppelt ist, welcher in Schließrichtung von einem Bremsdruck beaufschlagt ist. Die Ventileinrichtung ist somit in Schließrichtung bremsstufenabhängig vorbelastet, am Kolbenglied müssen also in ihrer Größe von der jeweiligen Bremsstufe abhängige Differenzdrücke wirksam werden, um die Ventileinrichtung während einer Bremsung wieder öffnen zu können. Der bekannte Beschleuniger weist somit in seiner Funktion eine unerwünschte Abhängigkeit von der jeweilig vorliegenden Bremsstufe auf.

Die Anordnung nach der bereits erwähnten DE-PS 967 167 weist lediglich einen Ansprung-Beschleuniger, jedoch kein mit einer einen Luftauslaß, von der Hauptluftleitung zur Atmosphäre überwachenden Ventileinrichtung gekoppeltes, vom Hauptluftleitungsdruck entgegen einem Bezugsdruck beaufschlagtes Kolbenglied auf und entspricht somit nicht dem Gattungsbegriff des Anspruches 1.

Für getrennt von einem Steuerventil, gegebenenfalls einem mit einen Ansprung-Beschleuniger ausgestatteten Dreidrucksteuerventil, anzuordnende Beschleuniger ist es bekannt, ein Kolbenglied vorzusehen, welches einerseits vom Druck in einer mit der Hauptluftleitung verbundenen Leitungskammer und andererseits vom Druck in einer Bezugsdruckkammer beaufschlagt ist und welches mit einer Ventileinrichtung gekoppelt ist, welche einerseits ein Ein- und Auslaßventil für die Bezugsdruckkammer und andererseits ein Auslaßventil für die Hauptluftleitung umfaßt. Die Anordnung ist dabei derart getroffen, daß der Beschleuniger bei seinem Ansprechen zuerst das Einlaßventil aus einer Druckluftquelle zur Bezugsdruckkammer schließt, sodann das Auslaßventil aus der Bezugsdruckkammer über eine gedrosselte Verbindung zur Atmosphäre öffnet und erst nachfolgend hierzu das Auslaßventil für die Hauptluftleitung öffnet. Ein derartiger Beschleuniger ist aus der DE-PS 969 085 bekannt. Diese Beschleuniger stellen, wie bereits erwähnt, zusätzliche Bauteile zum Steuerventil dar und erfordern somit zusätzlichen Bau- und Schaltungsaufwand ; eine große Schwierigkeit stellt bei diesen Beschleunigern die Drucküberwachung in der Bezugsdruckkammer dar, da diese Bezugsdruckkammer einerseits gegen Überladungen durch in die Hauptluftleitung bzw. die Druckluftquelle eingespeiste Füllstöße geschützt werden müssen, andererseits aber während Bremsungen genau definiert der Druckabsenkung in der Hauptluftleitung nachgeführt werden müssen, von anderen Faktoren mitbeeinflußte Druckschwankungen in der Druckluftquelle sich somit störend bemerkbar machen. Diese Beschleuniger waren daher bisher im wesentlichen nur als sogenannte Schnellbremsbeschleuniger verwendbar, welche nur bei besonders raschen Notbremsungen entsprechenden Drucksenkungen in der Hauptluftleitung ansprechen und die Ausführung der Notbremsung sicherstellen.

Es sind auch bereits sogenannte Betriebsbremsbeschleuniger bekannt, welche zu Beginn und auch beim stufenweisen Verstärken von Betriebsbremsungen ansprechen und hierbei für die Druckabsenkungsdauer in der Hauptluftleitung Druckluft aus der Hauptluftleitung abzapfen. Diese Betriebsbremsbeschleuniger weisen oftmals eine oszillierende Funktionsweise auf, sie zapfen also pulsierend Druckluft aus der Hauptluftleitung ab. Bei allen diesen Betriebsbremsbeschleunigern ist ein Kolbenglied vorgesehen, welches vom Druck in einer mit der Hauptluftleitung verbundenen Leitungskammer entgegen dem Druck in einer Bezugsdruckkammer beaufschlagt ist, wobei die Bezugsdruckkammer jeweils über eine Düse mit der Hauptluftleitung verbunden ist. Diese durchweg als vom Steuerventil getrennt anzuordnende Organe ausgebildeten Beschleuniger sind grundsätzlich mit dem Mangel behaftet, daß die Bezugsdruckkammer mit keinem sicheren Schutz vor beispielsweise durch Füllstöße bedingte Überladungen versehen sind, so daß insbesondere beim Abklingen von Füllstößen ein unerwünschtes Ansprechen möglich ist. Es ist zwar möglich, aus anderen Anordnungen bekannte Füllstoßschutzeinrichtungen vorzusehen, doch würden diese Vorrichtungen den Bauaufwand für die Betriebsbremsbeschleuniger in wirtschaftlich untragbarer Weise vergrößern. Ein weiterer Mangel dieser Betriebsbremsbeschleuniger ist in dem gedüsten Anschluß der Bezugsdruckkammer an die Hauptluftleitung zu sehen : Während Bremsungen vermag aus der Bezugsdruckkammer Druckluft in die Hauptluftleitung abzuströmen, wodurch die Druckabsenkung in der Hauptluftleitung behindert wird, und während Lösevorgängen ziehen die Übertragkammern aus der Hauptluftleitung an anderen Stellen dringend benötigte Druckluft in unerwünschter Weise zu ihrer Wiederaufladung ab. Betriebsbremsbeschleuniger der vorstehend beschriebenen Art sind beispielsweise der DE-OS 2 946 657 und den US-PS 4 073 544 sowie 4 145 090 entnehmbar.

Aus der US-PS 4 206 949 ist es auch bereits bekannt, einen pulsierend arbeitenden Betriebsbremsbeschleuniger hinsichtlich seiner Bezugsdruckkammer mit einem Steuerventil zu koppeln, derart, daß die Bezugsdruckkammer des Beschleunigers aus einer im Steuerventil bereits vorhandenen Bezugsdruckkammer gefüllt, also mit dieser bereits vorhandenen Bezugsdruckkammer verbunden wird. Die bekannten, derartigen Beschleuniger beeinflußen jedoch während ihres Arbeitens den Druck in der Bezugsdruckkammer des Steuerventils und können hierdurch die Funktionsweise des Steuerventils in unerwünschter Weise beeinflußen. Es muß also zumindest eine gegenseitige Abstimmung von Steuerventil und Betriebsbremsbeschleuniger erfolgen, diese Betriebsbremsbeschleuniger sind somit nicht ohne weiteres mit bereits vorhandenen Steuerventilen kombinierbar und sind somit nicht zum nachträglichen Einbau in bereits vorhandene Druckluftbremsanlagen geeignet.

Der Erfindung liegt die Aufgabe zugrunde, einen Beschleuniger der eingangs genannten Art zu schaffen, welcher bei geringem Bauaufwand eine seine sichere Funktion gewährleistende Druckführung für die Bezugsdruckkammer aufweist, insbesondere einen Überladungsschutz und zu Ansprechbeginn ein Druckniveau aufweist, welches dem Druckniveau in der Hauptluftleitung angepasst ist, und bei welchem die Bezugsdruckkammer keine unerwünschten Auswirkungen auf den Hauptluftleitungsdruck während Brems- und Lösevorgängen ausübt. Der Bremsbeschleuniger soll insbesondere nicht unnötig Druckluft verbrauchen. Weiterhin soll der Beschleuniger gut zur nachträglichen Ausrüstung vorhandener Druckluftbremsanlagen, insbesondere zur Kombination mit in diesen Druckluftbremsanlagen vorhandenen Dreidrucksteuerventilen mit Ansprung-Beschleuniger geeignet sein.

Diese Aufgabe wird gemäß der Erfindung durch die im kennzeichnenden Teil des Anspruches 1 angegebenen Merkmale gelöst.

Das Anschließen der dem Kolbenglied zugeordneten Bezugsdruckkammer gegebenenfalls anstelle der mitunter vorhandenen Entlüftungsdüse an die Übertragkammer des Ansprung-Beschleunigers bewirkt einerseits praktisch keine Funktionsänderung des Steuerventils, gewährleistet jedoch andererseits ein Beaufschlagen der Bezugsdruckkammer nur während Bremsungen, und zwar zu Bremsbeginn nach Anspringen des Ansprung-Beschleunigers mit dem dann jeweils in der Hauptluftleitung herrschenden Druck mit einem sowieso aus der Hauptluftleitung abzuzapfenden Luftvolumen. Überladungen der Bezugsdruckkammer sind somit ausgeschlossen, die Bezugsdruckkammer kann infolge des sich nach Ansprung des Steuerventils schließenden Absperrventils während weiterer Einbremsvorgänge nicht unerwünscht Druckluft in die Hauptluftleitung rückspeisen, während Lösevorgängen wird nicht in unerwünschter Weise Druckluft aus der Hauptluftleitung zur Bezugsdruckkammer abgezogen, und ein unerwünschtes Abspringen des Beschleunigers im Lösezustand der Bremsen, insbesondere beim Abklingen von Füllstößen, ist ausgeschlossen. Es ist zu betonen, daß dabei die vom Kolbenglied zu steuernde Ventileinrichtung beliebiger, bekannter oder neuer Bauart sein kann.

Nach der weiteren Erfindung vorteilhafte Ausgestaltungen des Beschleunigers sind den Unteransprüchen entnehmbar. Die Ausgestaltung nach den Unteransprüchen 2 und gegebenenfalls 3 verbessert die Entlüftung der Übertragkammer und der mit dieser gekoppelten Bezugsdruckkammer am Ende vom Bremslösevorgängen, wodurch die Wiederbereitschaft des Ansprung-Beschleunigers und auch der mit dem Kolbenglied gekoppelten Ventileinrichtung, also der Betriebsbremsbeschleunigereinrichtung günstig beeinflußt wird. Die Ausgestaltung nach Unteranspruch 4 ergibt eine weitere Verbesserung der Druckführung für die Bezugsdruckkammer, so daß deren Druck verbessert auf das jeweilige Niveau des Hauptluftleitungsdruckes abstimmbar ist. Weiterhin wird durch eine Ausgestaltung nach Unteranspruch 4 eine Aufrechterhaltung des jeweils geeigneten Bezugskammerdruckes während längerer Zeit an stehender Bremsungen auch bei Undichtigkeit der Bezugsdruckkammer bzw. der mit dieser verbundenen Ventil- und Kanaleinrichtungen gewährleistet. Die Unteransprüche 5 und 6 zeigen für den Beschleuniger besonders geeignete, mit dem Kolbenglied zu koppelnde Ventileinrichtungen auf.

In den Zeichnungen sind Ausführungsbeispiele für nach der Erfindung ausgestaltete Beschleuniger schematisch dargestellt, und zwar zeigt

Figur 1 ein mit den Beschleuniger kombiniertes Dreidrucksteuerventil, wobei die Ventileinrichtung beliebiger Bauart sein kann, und

Figur 2 und 3 jeweils eine bevorzugte Bauart für die Ventileinrichtung.

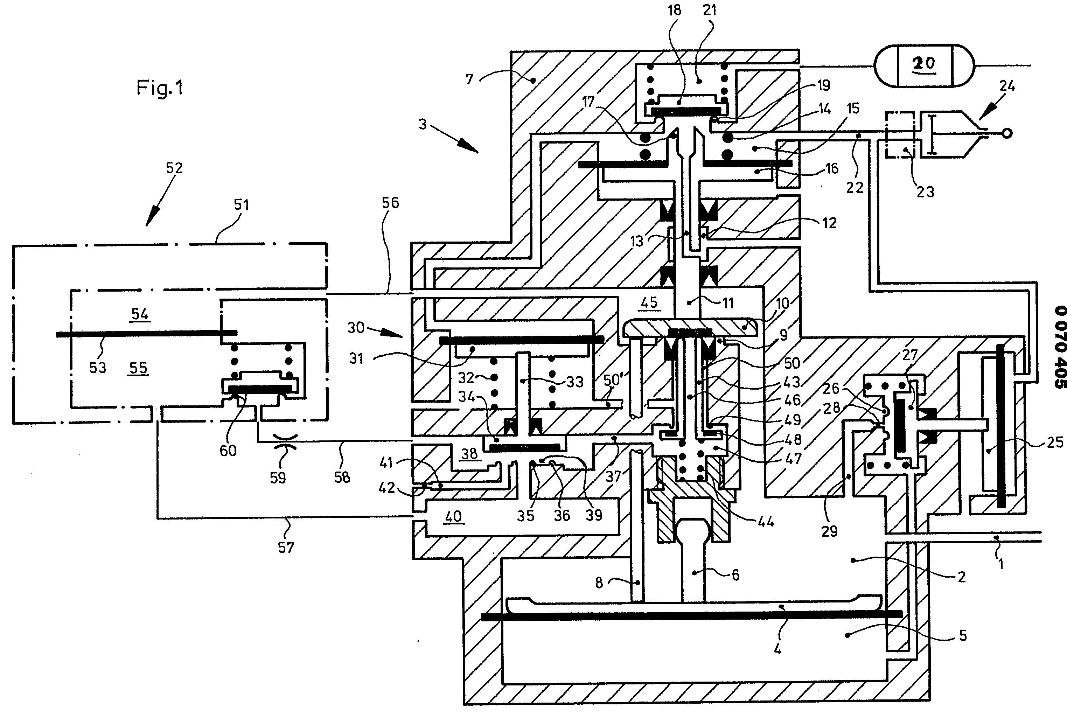

Die Druckluftbremsanlange nach Fig. 1 weist ein an eine Hauptluftleitung 1 mit seiner Steuerkammer 2 angeschlossenes Dreidrucksteuerventil 3 auf. Die Steuerkammer 2 ist mittels eines Steuerkolbens 4 von einer Kammer konstanten Druckes 5 abgetrennt. Der mittels eines Stößels 6 im Gehäuse 7 geführte Steuerkolben 4 ist über einen weiteren, im Gehäuse 7 geführten Stößel 8 mit einem am Gehäuse 7 mittels eines Anschlages 9 abfangbaren Ventilteller 10 gekoppelt. Der Ventilteller 10 ist mit einem Ventilstößel 11 gekoppelt, welcher abgedichtet verschieblich im Gehäuse 7 geführt ist, eine über eine Öffnung 12 ständig mit der Atmosphäre verbundene Längsbohrung 13 aufweist, einen einerseits von Atmosphärendruck, andererseits von einer Feder 14 und dem Bremsdruck in einer Kammer 15 beaufschlagten Kolben 16 trägt und mit einem die stirnseitige Mündung der Längsbohrung 13 umgebenden Ventilsitz 17 endet. Dem Ventilsitz 17 steht in der Lösestellung des Dreidrucksteuerventils 3 mit Abstand eine Doppelventildichtung 18 gegenüber, welche zusammen mit einem gehäusefesten Ventilsitz 19 ein den Luftdurchgang aus einem mit einem Vorratsluftbehälter 20 verbundenen Raum 21 in die Kammer 15 überwachendes Ventil 18, 19 bildet.

Die Kammer 15 steht über eine Leitung 22 und gegebenenfalls ein Relaisventil 23 mit einem Bremszylinder 24 in Verbindung. Der Vorratsluftbehälter 20 wird in üblicher, nicht dargestellter Weise aus der Hauptluftleitung 1 mit Druckluft versorgt.

Weiterhin befindet sich im Gehäuse 7 ein Kolben 25, der in Schließrichtung eines aus einem gehäusefesten Ventilsitz 26 und einer in Öffnungsrichtung federbelasteten Ventildichtung 27 vom Druck in der Kammer 15 entgegen Atmosphärendruck belastet ist. Das Ventil 26, 27 ist in eine eine Düse 28 aufweisende Verbindung 29 von der Steuerkammer 2 zur Kammer konstanten Druckes 5 eingeordnet.

Ein im Gehäuse 7 untergebrachter Ansprung-Beschleuniger 30 weist einen Kolben 31 auf, welcher einerseits vom Bremsdruck in der Kammer 15 und andererseits von Atmosphärendruck und der Kraft einer Feder 32 belastet ist. Der Kolben 31 ist über einen abgedichtet im Gehäuse 7 geführten Stößel 33 mit einer Ventildichtung 34 verbunden, welche zusammen mit zwei konzentrisch angeordneten, gehäusefesten Ventilsitzen 35 und 36 ein gleichsinnig und annähernd auch gleichzeitig öffnendes Doppelventil 34, 35, 36 bildet. Die Ventildichtung 34 befindet sich in einem mit einem Kanalabschnitt 37 verbundenen Raum 38, der vom größeren Ventilsitz 36 und der Ventildichtung 34 gebildete Ventildurchgang befindet sich zwischen dem Raum 38 und einem von den beiden Ventilsitzen 35 und 36 begrenzten Ringraum 39, und der kleinere Ventilsitz 35 bildet mit der Ventildichtung 34 einen Ventildurchgang vom Ringraum 39 zu einer mit dem Innenraum des Ventilsitzes 35 verbundenen Übertragkammer 40. Vom Ringraum 39 führt ein Kanal 41 über eine Düse 42 zur Atmosphäre.

Weiterhin gehört dem Ansprung-Beschleuniger eine Steuerhülse 43 zu, welche gleichachsig zum Ventilstößel 11 im Gehäuse 7 abgedichtet verschieblich gelagert ist. Das obere Ende der durch eine Feder 44 gegen den Ventilteller 10 angedrückten Steuerhülse 43 bildet zusammen mit dem Ventilteller 43 ein den Luftdurchgang aus einem mit der Steuerkammer 2 verbundenen Raum 45 zum Innenraum 46 der Steuerhülse 43 sowie einem Raum 47 im Gehäuse 7 überwachendes Einlaßventil 10, 43. Ein im Raum 47 befindlicher Flansch 48 der Steuerhülse 43 bildet zusammen mit einem gehäusefesten Ventilsitz 49, welcher die Einmündung eines die Steuerhülse 43 umgebenden Ringraumes 50 zwischen der Steuerhülse 43 und dem Gehäuse 7 umgibt, ein Auslaßventil 48, 49. Der Kanalabschnitt 37 mündet in den Raum 47 ein. Der Ringraum 50 ist über einen Entlüftungskanal 50' mit der Atmosphäre verbunden.

Insoweit entspricht das Dreidrucksteuerventil 3 im wesentlichen demjenigen nach der erwähnten DE-OS 2 651 377, wobei lediglich durch Wegfall der bekannten Entlüftung für die Übertragkammer 40 und der Ausbildung des Absperrventils zwischen Kanalabschnitt 37 und Übertragkammer 40 als Doppelventil 34, 35, 36, Wegfall des bekannten, zweiten Betätigungskolbens für dieses Absperrventil sowie Hinzunahme des Auslaßventils 48, 49 später zu erläuternde, gewisse Funktionsunterschiede auftreten. Weiterhin entspricht der Aufbau und die Funktionsweise des Dreidrucksteuerventils 3 auch weitgehend dem Dreidrucksteuerventil nach der DE-PS 967 165, wobei dort lediglich das einfach ausgebildete Absperrventil vom Doppelventil 34, 35, 36 sowie die Entlüftung der Übertragkammer vom Dreidrucksteuerventil 3 abweichen. Aufgrund des Standes der Technik ist die grundsätzliche Funktionsweise des Dreidrucksteuerventiles 3 bekannt und braucht daher hier nicht weiter erläutert zu werden.

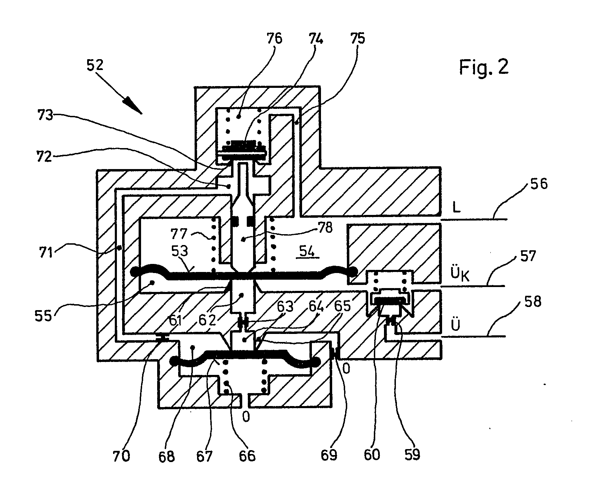

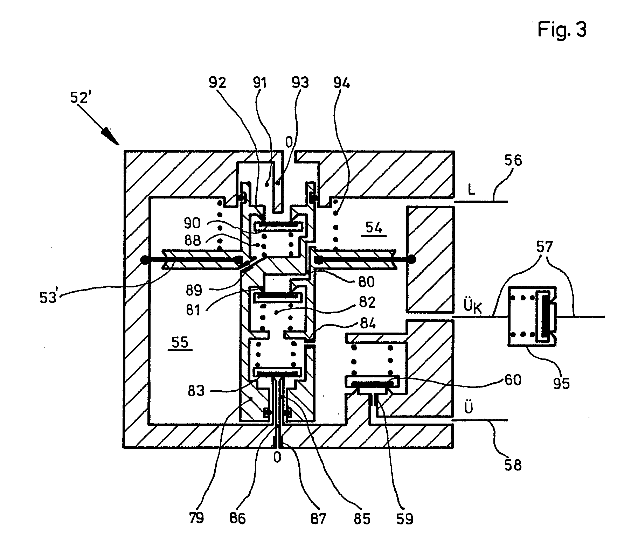

Die Druckluftbremsanlage weist des weiteren einen durch eine strichpunktierte Umrahmung 51 angedeuteten Betriebsbremsbeschleuniger 52 auf, der beliebig, beispielsweise entsprechend der DE-OS 2 946 657 oder gemäß den US-PS en 4 073 544 oder 4 145 090 — alle Schriften wurden eingangs bereits erwähnt — ausgebildet sein kann. Besonders geeignete Ausbildungen des Betriebsbremsbeschleunigers 52 werden später anhand Fig. 2 und 3 erläutert.

Der Betriebsbremsbeschleuniger 52 wird vorzugsweise als an das Gehäuse 7 anflanschbares Organ ausgebildet, in Fig. 1 ist lediglich zum Verdeutlichen der Baugruppen der Betriebsbremsbeschleuniger 52 vom Gehäuse 7 etwas abgerückt dargestellt.

Der Betriebsbremsbeschleuniger 52 weist ein Kolbenglied 53 auf, welches einerseits vom Druck in einer Leitungskammer 54 und andererseits vom Bezugsdruck in einer Bezugsdruckkammer 55 belastet ist. Die Leitungskammer 54 ist mit Hauptluftleitungsdruck beaufschlagt, der vorzugsweise gemäß Fig. 1 aus dem Raum 45 durch einen Kanal 56 zugeführt wird. Die Bezugsdruckkammer 55 steht über einen Kanal 57 mit der Übertragkammer 40 in Verbindung, bei bereits vorhandenen Dreidrucksteuerventilen üblicher Bauart kann der Kanal 57 zweckmäßig anstelle der dortigen Entlüftung an die Übertragkammer 40 angeschlossen werden. Weiterhin führt vom Kanalabschnitt 37 bzw. dem Raum 38 ein Kanal 58 über eine Düse 59 und ein Rückschlagventil 60 zur Bezugsdruckkammer 55. Abweichend zu Fig. 1, nach welcher nur das Rückschlagventil 60 in den Betriebsbremsbeschleuniger 52 integriert dargestellt ist, können beide, in Serie in den Kanal 58 eingeordnete Schaltungsorgane beliebig im Betriebsbremsbeschleuniger 52, dem Kanal 58 oder dem Gehäuse 7 angeordnet werden.

Die einen Auslaß aus der Leitungskammer 54 zur Atmosphäre überwachende Ventileinrichtung des Betriebsbremsbeschleunigers 52 ist in Fig. 1 nicht dargestellt, da sie, wie bereits erwähnt, beliebige Ausbildungen erfahren kann.

Bei gelöster, betriebsbereiter Bremse nehmen alle Teile die in Fig. 1 dargestellten Schaltstellungen ein, wobei über den Kanal 56 die Leitungskammer 54 mit Hauptluftleitungsdruck von Regeldruckhöhe beaufschlagt ist und die Bezugsdruckkammer 55 über den Kanal 57 und die Übertragkammer 40 sowie das geöffnete Doppelventil 34, 35, 36, den Kanal 41 und die Düse 42 entlüftet ist. Das Auslaßventil 48, 49 ist ebenfalls geöffnet, so daß der Kanal 58 und der Raum 38 zusätzlich zum geöffneten Doppelventil 34, 35, 36 über den Kanalabschnitt 37, den Raum 47, den Ringraum 50 und dessen Entlüftungskanal 50' mit der Atmosphäre verbunden sind.

Beim durch Druckabsenken in der Hauptluftleitung 1 bewirkten Einleiten einer Bremsung hebt sich der Steuerkolben 4 an, wobei das Auslaßventil 48, 49 geschlossen und sodann das Einlaßventil 10, 43 geöffnet wird. Aus dem Raum 45 strömt sodann durch die Steuerhülse 43 Hauptluftleitungsluft in den Raum 47 und durch den Kanalabschnitt 37 in den Raum 38 ein. Aus dem Raum 38 gelangt Druckluft zum einen über den Kanal 41 und die Düse 42 zur Atmosphäre und zum anderen über den inneren Ventildurchgang, 34, 35 in die Übertragkammer 40 ; durch diese doppelte Luftabzapfung wird die anfängliche Druckabsenkung in der Hauptluftleitung 1 derart verstärkt, daß das Dreidrucksteuerventil 3 mit Sicherheit völlig anspringt, d. h. sich sein Steuerkolben 4 bis zum Einsteuern von Druckluft aus dem Raum 21 über das sich öffnende Ventil 18, 19 in die Kammer 15 anhebt. Aus der Übertragkammer 40 gelangt währenddessen Druckluft durch den Kanal 57 in die Bezugsdruckkammer 55 und lädt diese zumindest annähernd auf den gerade herrschenden Hauptluftleitungsdruck auf, wodurch der Betriebsbremsbeschleuniger 52 aktiviert wird. Der ansteigende Bremsdruck in Kammer 15 schließt über Kolben 25 das Ventil 26, 27, wodurch die Kammer konstanten Druckes 5 abgesperrt wird, und schließt des weiteren über Kolben 31 das Doppelventil 34, 35, 36, wodurch der Raum 38, der Kanal 41 und die Übertragkammer 40 voneinander abgetrennt werden. Falls noch nicht erfolgt, wird nunmehr aus dem Raum 38 über Kanal 58, Düse 59 und Rückschlagventil 60 die Bezugsdruckkammer 55 vollends auf das augenblickliche Niveau des Hauptluftleitungsdruckes — dieser ist bereits unter die Regeldruckhöhe abgesenkt — angehoben, während zugleich die Luftabzapfung vermittels des Ansprung-Beschleunigers 30 in die Übertragkammer 40 sowie durch den Kanal 41 zur Atmosphäre beendet wird. Bei weiterer Druckabsenkung in der Hauptluftleitung 1 sinkt der Druck in der Leitungskammer 54 entsprechend ab, während der Druck in der Bezugsdruckkammer 55 anfänglich erhalten bleibt und das Kolbenglied 53 überwiegend beaufschlagt ; der Betriebsbremsbeschleuniger 52 wird daher in üblicher, bekannter Weise betätigt, wobei er vorzugsweise pulsierend Druckluft aus der Leitungskammer 54 zur Atmosphäre abzapft und zugleich den Druck in der Bezugsdruckkammer 55 und damit auch in der Übertragkammer 40 zu seiner Stabilisierung entsprechend absenkt. Bei Beendigen der in die Hauptluftleitung 1 und damit die Leitungskammer 54 eingesteuerten Druckabsenkung beendet auch der Betriebsbremsbeschleuniger 52 in bekannter Weise das Luftabzapfen aus der Leitungskammer 54. Das Dreidrucksteuerventil 3 steuert währenddessen in dem Bremszylinder 24 eine der Druckabsenkung in der Hauptluftleitung 1 entsprechende Bremsdruckhöhe und gelangt sodann unter gewisser Absenkung des Steuerkolbens 4 in seine Abschlußstellung, in welcher die Doppelventildichtung 18 sowohl auf dem Ventilsitz 19 als auch auf den Ventilisitz 17 aufliegt. Das Einlaßventil 10, 43 ist in dieser Abschlußstellung noch geöffnet und das Auslaßventil 48, 49 verbleibt geschlossen.

Beim Verstärken der eingesteuerten Bremsstufe durch weitere Druckabsenkung in der Hauptluftleitung 1 wiederholen sich die vorstehend geschilderten Vorgänge entsprechend, wobei der Betriebsbremsbeschleuniger 52 erneut in Tätigkeit tritt und vorübergehend Druckluft aus der Leitungskammer 54 zur Atmosphäre abzapft.

Beim nachfolgenden Bremsenlösen senkt sich der Steuerkolben 4 weiter ab und der Bremszylinder 24 wird über den sich von der Doppelventildichtung 18 absenkenden Ventilsitz 17 sowie die Längsbohrung 13 in die Atmosphäre entlüftet. Bei Erreichen der Vollösestellung setzt sich der Ventilteller 10 auf die Steuerhülse 43 auf und drückt diese unter Öffnen des Auslaßventils 48, 49 abwärts. Der Raum 38 wird somit entlüftet. Bei Unterschreiten eines niedrigen Restdruckes in der Kammer 15 öffnen das Ventil 26, 27 sowie das Doppelventil 34, 35, 36, wordurch die Bezugsdruckkammer 55 und die Übertragkammer 40 über den Kanal 41 und die Düse 42 sowie parallel hierzu über das Auslaßventil 48, 49 entlüftet werden.

Es ist offensichtlich, daß beispielsweise durch Füllstöße bewirkte Überladungen der Hauptluftleitung 1 höchstens in die Leitungskammer 54 des Betriebsbremsbeschleunigers gelangen können, wo sie jedoch völlig unschädlich sind. Das bei derartigen Überladungen jedenfalls geschlossene Einlaßventil 10, 43 schließt aus, daß die Überladungen auch in die Bezugsdruckkammer 55 gelangen können, wodurch beim nachfolgenden Abbau der Überladungen ein ungewolltes Anspringen des Betriebsbremsbeschleunigers möglich wäre. Weiterhin ist ersichtlich, daß im Lösezustand die Bezugsdruckkammer 55 drucklos gehalten wird, erst zu Bremsbeginn wird sie nach Anspringen des Ansprung-Beschleunigers 30 mit durch diesen aus der Hauptluftleitung abzuzapfender Druckluft in dem für die Funktion des Betriebsbremsbeschleunigers erforderlichen Maße gefüllt. Beim nachfolgenden Lösen benötigt der Betriebsbremsbeschleuniger 52 keinerlei Druckluft zum Wiederaufladen der in ihrem Druck abgesenkten Bezugsdruckkammer 55, der Lösevorgang wird durch diese Druckluftersparnis erleichtert. Für den Einbremsvorgang ist des weiteren wesentlich, daß im Gegensatz zu bisher bekannten Betriebsbremsbeschleunigern aus der Bezugsdruckkammer 55 keinerlei Druckluft zur Hauptluftleitung 1 abströmen kann, wodurch der Einbremsvorgang erschwert werden könnte. Der Betriebsbremsbeschleuniger 52 vermeidet also nicht nur jeden unnötigen Druckluftverbrauch, sondern weist zudem eine sowohl die Brems- wie die Lösevorgänge in keiner Weise behindernde Funktion bzw. Teilfunktion auf.

In Fig. 2 ist eine vorzugsweise Ausgestaltung des Betriebsbremsbeschleunigers 52 dargestellt. Es sind die Kanäle 56, 57 und 58, die Düse 59, das Rückschlagventil 60, das als Membrane ausgebildete Kolbenglied 53, die Leitungskammer 54 sowie die Bezugsdruckkammer 55 ersichtlich. In der gezeigten Ruhestellung liegt das Kolbenglied 53 bezugsdruckkammerseitig auf einem gehäusefesten Ventilsitz 61 auf, dessen Innenraum 62 über eine Düse 63 mit dem Innenraum 64 eines weiteren Ventilsitzes 65 verbunden ist. Gegen den Ventilsitz 65 wird vermittels einer Feder 66 eine Membrane 67 angedrückt. Der den Ventilsitz 65 umgebende, von der Membrane 67 begrenzte Raum 68 steht einerseits über eine Düse 69 mit der Atmosphäre und andererseits über eine weitere Düse 70 mit einem Kanal 71 in Verbindung. Der Kanal 71 führt zu einem Raum 72, der vermittels eines aus einem gehäusefesten Ventilsitz 73 und einer federbelasteten Dichtplatte 74 gebildeten Ventils 73, 74 von einem über einen Kanal 75 mit der Leitungskammer 54 verbundenen Raum 76 abgetrennt ist. Eine in der Leitungskammer 54 angeordnete Feder 77 belastet das Kolbenglied 53 in Andrückrichtung an den Ventilsitz 61 und ein auf dem Kolbenglied 53 aufsitzender Stößel 78 durchsetzt die Leitungskammer 54, ist abgedichtet im Gehäuse geführt und endet im Raum 72 mit geringem Abstand vor der Dichtplatte 74.

Bei gelöster, aufgeladener Bremse nimmt der Betriebsbremsbeschleuniger 52 die aus Fig. 2 ersichtliche Schaltstellung ein, die Leitungskammer 54 sowie der Raum 76 sind aufgeladen, während alle übrigen Räume des Betriebsbremsbeschleunigers 52 entleert sind. Bei Bremsbeginn wird, wie bereits beschrieben, im wesentlichen über den Kanal 57 und auch über den Kanal 58, die Düse 59 und das Rückschlagventil 60 die Bezugsdruckkammer 55 mit dem augenblicklich herrschenden Hauptluftleitungsdruck beaufschlagt. Sinkt sodann der Hauptluftleitungsdruck und damit der Druck in der Leitungskammer 54 etwas ab, wird das Kolbenglied 53 vom Bezugsdruck in der Bezugsdruckkammer 55 überwiegend beaufschlagt und hebt sich vom Ventilsitz 61 ab, wodurch der Bezugsdruck über die Düse 63 auch in den Innenraum 64 des Ventilsitzes 65 gelangt. Sodann hebt das Kolbenglied 53 über den Stößel 78 die Dichtplatte 74 vom Ventilsitz 73 ab, wodurch das Ventil 73, 74 geöffnet wird und Druckluft aus der Leitungskammer 54 über die Düse 70 in den Raum 68 einströmt und aus diesem über die Düse 69 zu einem gewissen Anteil weiter in die Atmosphäre gelangt. Im Raum 68 baut sich dabei ein Zwischendruck auf, welcher alsbald die Membrane 67 gegen die Kraft der Feder 66 abwärts drückt, wodurch der Innenraum 64 mit dem Raum 68 verbunden wird und Druckluft auch aus der Bezugsdruckkammer 55 über die Düse 63 sowie durch den Raum 68 und die Düse 69 zur Atmosphäre abströmen kann. Die Düsen sind dabei derart bemessen, daß die so einsetzende Druckabsenkung in der Bezugsdruckkammer 55 rascher erfolgt als die Druckabsenkung in der Leitungskammer 54 ; sobald der Druck in der Bezugsdruckkammer 55 daher unter den in der Leitungskammer 54 herrschenden Druck sinkt, senkt sich das Kolbenglied 53 unter Schließen des Ventils 73, 74 ab. Die somit aussetzende Nachspeisung von Hauptluftleitungsdruck durch das Ventil 73, 74 zum Raum 68 wird durch Druckluftnachspeisung aus der Bezugsdruckkammer 55 durch die Düse 63 zum Raum 68 ersetzt, der Raum 68 verbleibt also mit einem gewissen Druck beaufschlagt und die Membrane 67 verbleibt somit vom Ventilsitz 65 abgehoben. Die hierdurch bedingte, weitere Druckabsenkung in der Bezugsdruckkammer 55 ergibt eine weitere Absenkung des Kolbengliedes 53, bis dieses sich auf den Ventilsitz 61 aufsetzt und die Luftabströmung aus der Bezugsdruckkammer 55 zum Raum 68 unterbricht. Der Druck im Raum 68 baut sich sodann über die Düse 69 zur Atmosphäre ab und die Feder 66 vermag die Membrane 67 hochzudrücken, so daß sie sich an den Ventilsitz 65 anlegt und den Innenraum 64 vom Raum 68 abtrennt. Damit ist ein Abzapfzyklus beendet. Falls der Hauptluftleitungsdruck weiter absinkt, wiederholen sich entsprechende Abzapfzyklen, wobei jedesmal Druckluft aus der Leitungskammer 54 und damit aus der Hauptluftleitung über die Düsen 70 und 69 zur Atmosphäre abgeblasen wird. Erst bei Beendigen der Druckabsenkung in der Hauptluftleitung verbleibt durch den dann konstant bleibenden Druck in der Leitungskammer 54 nach Beendigen eines Abzapfzyklus das Kolbenglied auf dem Ventilsitz 61 aufliegend, der Betriebsbremsbeschleuniger 52 beendet also seine Abzapfzyklen und verbleibt in Ruhe. Bei nachfolgenden, weiteren Druckabsenkungen in der Hauptluftleitung, wie sie zum Einsteuern einer stärkeren Bremsstufe auftreten können, wiederholen sich die vorstehend geschilderten Vorgänge entsprechend.

Beim Lösen der Bremse wird gegen Ende des Lösevorganges in der bereits beschriebenen Weise die Bezugsdruckkammer 55 über den Kanal 57 entleert.

Eine weitere, vorzugsweise Ausgestaltung des Betriebsbremsbeschleunigers ist in Fig. 3 mit Betriebsbremsbeschleuniger 52' dargestellt. Nach Fig. 3 ist das Kolbenglied 53' des wiederum an die Kanäle 56, 57 und 58 angeschlossenen und die Düse 59 sowie das Rückschlagventil 60 aufweisenden, im übrigen an sich bekannten Betriebsbremsbeschleunigers 52' mit einer Ventilhülse 79 verbunden, deren leitungskammerseitiges Ende abgedichtet verschieblich im Gehäuse geführt ist. Von der Leitungskammer 54 führt ein Kanal 80 über ein federbelastetes Rückschlagventil 81 in einen ersten, bezugsdruckkammerseitig angeordneten Innenraum 82 der Ventilhülse 79. Der eine federbelastete Ventildichtung 83 aufnehmende Innenraum 82 ist über eine Düse 84 mit der Bezugsdruckkammer 55 verbunden. Ein gehäusefestes Ventilrohr 85 ragt bezugsdruckkammerseitig derart in die Ventilhülse 79, daß die Ventildichtung 83 auf das Ende des Ventilrohres 85 aufsetzbar ist. Die Bohrung 86 des Ventilrohres 85 mündet andererseits über eine Düse 87 in die Atmosphäre. Die Ventilhülse 79 ist abgedichtet verschieblich auf dem Ventilrohr 85 gelagert. Ein zweiter, leitungskammerseitig angeordneter Innenraum 88 der Ventilhülse 79 steht über eine Düse 89 mit der Bezugsdruckkammer 55 in Verbindung und beinhaltet eine weitere, federbelastete Ventildichtung 90, welche auf einem einen stirnseitigen Auslaß 91 umgebenden Ventilsitz 92 der Ventilhülse 79 aufzuliegen vermag. Ein gehäusefester Anschlag 93 greift in den Auslaß 91 ein und endet in der Ruhestellung des Betriebsbremsbeschleunigers 52' mit gewissem Abstand vor der Ventildichtung 90. In der Leitungskammer 54 befindet sich eine das Kolbenglied 53' belastende Feder 94.

Im Unterschied zu den vorbeschriebenen Ausführungsbeispielen ist beim Betriebsbremsbeschleuniger nach Fig. 3 in den Kanal 57 ein Rückschlagventil 95 eingeordnet, welches in Strömungsrichtung zur Bezugsdruckkammer 55 öffnet. Das Rückschlagventil 95 weist nur eine sehr geringe Rückhaltewirkung auf, während das Rückschlagventil 81 durch Belastung mit einer stärkeren Feder eine größere Rückhaltewirkung aufweisen kann.

Bei betriebsbereiter, aufgeladener Bremsanlage nimmt der Betriebsbremsbeschleuniger nach Fig. 3 die gezeigte Schaltstellung ein, wobei aus der Leitungskammer 54 über das Rückschlagventil 81 und die Düse 84 auch die Bezugsdruckkammer 55 mit einer bestimmten, um den Rückhaltedruck des Rückschlagventils 81 den Druck in der Hauptluftleitung unterschreitenden Druckhöhe aufgeladen ist ; das Rückschlagventil 95 verhindert ein Abströmen der Druckluft aus der Bezugsdruckkammer 55 durch den Ventildurchgang 34, 36 und den Kanal 41 sowie die Düse 42 zur Atmosphäre. Die Ventildichtung 83 liegt auf dem Ventilrohr 85 und die Ventildichtung 90 auf dem Ventilsitz 92 auf. Die Ventilhülse 79 befindet sich gemäß Fig. 3 in ihrer tiefsten Stellung.

Wird zum Bremsen der Druck in der Hauptluftleitung abgesenkt und nach Hubbeginn des Kolbensystems des Dreidrucksteuerventils durch Öffnen des Einlaßventils 10, 43 der Kanal 57 mit dem jeweiligen Hauptluftleitungsdruck beaufschlagt, so wird über das Rückschlagventil 95 die Bezugsdruckkammer 55 ebenfalls rasch auf die nunmehrige Druckhöhe in der Hauptluftleitung aufgeladen und der Betriebsbremsbeschleuniger 52' somit aktiviert. Bei weiterer Druckabsenkung in der Hauptluftleitung wird das Kolbenglied 53' überwiegend auf seiner Unterseite beaufschlagt, hebt sich mitsamt der Ventilhülse 79 an und durch Mitnahme der Ventildichtung 83 wird diese vom Ventilrohr 85 abgehoben. Damit kann Druckluft aus der Leitungskammer 54 durch den Kanal 80, dem Innenraum 82, die Bohrung 86 und die Düse 87 zur Atmosphäre abströmen. Die Rückhaltewirkung des Rückschlagventils 81 bewirkt dabei, daß der Druck im Innenraum 82 stets etwas niedriger als in der Leitungskammer 54 ist, so daß auch zwischen der Bezugsdruckkammer 55 und dem Innenraum 82 ein bestimmtes Druckgefälle ansteht, wodurch Druckluft aus der Bezugsdruckkammer 55 durch die Düse 84 in den Innenraum 82 einströmt und aus diesem durch das Ventilrohr 85 und die Düse 87 zur Atmosphäre abströmt. In der Bezugsdruckkammer 55 wird hierdurch eine gewisse, der Druckabsenkung in der Leitungskammer 54 nacheilende Druckabsenkung bewirkt. Kurz nach Ansprechen des Betriebsbremsbeschleunigers 52' setzt sich im Dreidrucksteuerventil 3 die Ventildichtung 34 auf die Ventilsitze 35 und 36 auf, was jedoch hinsichtlich des Betriebsbremsbeschleunigers 52' ohne weitere Auswirkung ist. Bei verstärkter Druckabsenkung in der Leitungskammer 54 hebt sich das Kolbenglied 53' weiter an, die Ventildichtung 90 wird dabei durch den Anschlag 93 vom Ventilsitz 92 abgehoben und es öffnet sich somit eine weitere Verbindung von der Bezugsdruckkammer 55 über die Düse 89, den Innenraum 88 und den Auslaß 91 zur Atmosphäre ; der Druck in der Bezugsdruckkammer 55 wird daher verstärkt abgesenkt, so daß er jedenfalls die augenblicklich in der Leitungskammer 54 herrschende Druckhöhe unterschreitet, das Kolbenglied 53' senkt sich etwas ab und die Ventildichtung 90 setzt sich wieder auf den Ventilsitz 92 unter Absperren der zusätzlichen Entlüftung der Bezugsdruckkammer durch den Auslaß 91 auf. Bei weiterhin anhaltender Druckabsenkung in der Leitungskammer 54 wiederholen sich diese Vorgänge, der Betriebsbremsbeschleuniger 52' gelangt also zum Oszillieren, wobei je nach Hubamplitude des Kolbengliedes 53' zwischenzeitlich auch die Ventildichtung 83 auf das Ventilrohr 85 zum kurzzeitigen, wiederholten Unterbrechen der beschriebenen Entlüftung der Leitungskammer 54 und der Bezugsdruckkammer 55 durch die Bohrung 86 aufgesetzt werden kann. Nach Beendigen der Druckabsenkung in der Leitungskammer 54 kehrt der Betriebsbremsbeschleuniger 52' nach entsprechender Druckabsenkung in der Bezugsdruckkammer 55 in die dargestellte Schaltstellung zurück ; die Rückhaltung der Entlüftung der Leitungskammer 54 durch das Rückschlagventil 81 gewährleistet dabei eine Druckabsenkung in der Bezugsdruckkammer 55 durch die Düse 84 derart, daß sich wenigstens ein Druckgleichgewicht zwischen Leitungskammer 54 und Bezugsdruckkammer 55 ergibt und die Feder 94 das Kolbenglied 53' in die dargestellte Lage zu drücken vermag.

Beim Lösen der Bremsanlage verbleibt der Betriebsbremsbeschleuniger 52' in der dargestellten Schaltstellung, nach Abheben der Ventildichtung 34 von den Ventilsitzen 35 und 36 im Dreidrucksteuerventil 3 schließt jedoch das Rückschlagventil 95 eine Entlüftung der Bezugsdruckkammer 55 aus, und in letzterer verbleibt eine Druckhöhe, welche sich über die Düse 84 allmählich anhebt, bis sie um die Rückhaltewirkung des Rückschlagventils 81 unterhalb der Leitungsdruckhöhe liegt. Die Düse 84 ist dabei so klein, daß, unter Berücksichtigung der Rückhaltewirkung des Rückschlagventils 81, kein den Lösevorgang störender Luftverbrauch aus der Hauptluftleitung erfolgt.

Der Kanal 58 und das Rückschlagventil 60 gewährleisten wie bei den zuvor beschriebenen Ausführungsbeispielen, daß der Druck in der Bezugsdruckkammer 55 während Bremsungen den jeweiligen Druck in der Hauptluftleitung nie wesentlich oder längerfristig unterschreiten kann.

Abweichend zur Ausführung nach Fig. 3 kann der Düse 84 ein beispielsweise aus einer Gummilamelle gebildetes Rückschlagventil geringer Rückhaltewirkung zugeordnet werden, welches in Strömungsrichtung vom Innenraum 82 zur Bezugsdruckkammer 55 sperrt. Das Rückschlagventil 95 in Kanal 57 kann dann entfallen. In dieser Ausführung wird, wie in Fig. 2 beschrieben, im Lösezustand die Bezugsdruckkammer 55 des geänderten Betriebsbremsbeschleunigers nach Fig. 3 entlüftet gehalten und erst zu Bremsbeginn über die Kanäle 57 und 58 mit Druckluft gefüllt. In dieser Ausbildung wird somit jeglicher Druckluftverbrauch für die Bezugsdruckkammer 55 während oder kurz nach Lösevorgängen vermieden, während die Funktion des Betriebsbremsbeschleunigers im übrigen erhalten bleibt.

In Abänderung zum Ausführungsbeispiel nach Fig. 3 ist es möglich, beim Betriebsbremsbeschleuniger 52' die Düse 84 zu verschließen und somit eine Entlüftung der Bezugsdruckkammer 55 durch den Innenraum 82 und die Bohrung 86 auszuschließen. Bei dieser Ausführungsform können die Rückschlagventile 81 und 95 entfallen, beim Ansprechen pulsieren das Kolbenglied 53' und die Ventilhülse 79 jedenfalls um Hübe, welche zum Abheben der Ventildichtung 90 vom Ventilsitz 92 einerseits und zum Aufsetzen der Ventildichtung 83 auf das Ventilrohr 85 andererseits ausreichen.

Der Beschleuniger mit beliebig ausgestaltetem Betriebsbremsbeschleuniger, beispielsweise den Betriebsbremsbeschleuniger nach Fig. 2 oder 3, kann auch mit Steuerventilen anderer als der in Fig. 1 gezeigten Bauart kombiniert werden, sofern diese Steuerventile nur einen Ansprung-Beschleuniger mit einer Übertragkammer aufweisen. Derartige Steuerventile können sehr ähnlich dem Dreidrucksteuerventil 3, jedoch unter Entfall des Auslaßventils 48, 49 sowie des Entlüftungskanals 50', aber auch völlig andersartig, beispielsweise als einlösige Zweidrucksteuerventile, ausgebildet sein.

**Ansprüche**

1. Beschleuniger für Steuerventile, insbesondere Dreidrucksteuerventile (3) von Schienenfahrzeug-Druckluftbremsanlagen, welche einen den Hauptluftleitungsdruck zu Bremsbeginn absenkenden Ansprung-Beschleuniger (30) mit einer Übertragkammer (40), mit einem sich zu Bremsbeginn öffnenden Einlaßventil (10, 43) zwischen der Hauptluftleitung (1) und der Übertragkammer (40), gegebenenfalls mit einem nur in der Lösestellung des Steuerventils (3) geöffnetem Auslaßventil (48, 49) von der Übertragkammer (40) zur Atmosphäre, und mit einem nach Ansprung des Steuerventils (3) und Füllung der Übertragkammer (40) sich schließenden Absperrventil (Doppelventil 34, 35, 36) zwischen der Übertragkammer (40) und dem Einlaßventil (10, 43), und mit einem Betriebsbremsbeschleuniger (52, 52') umfassend ein vom Druck in einer mit der Hauptluftleitung (1) verbundenen Leitungskammer (54) entgegen dem Druck in einer Bezugsdruckkammer (55) beaufschlagtes Kolbenglied (53, 53') sowie eine mit dem Kolbenglied (53, 53') gekoppelte, bei dessen überwiegender Bezugsdruckbeaufschlagung direkt oder indirekt einen Luftauslaß von der Hauptluftleitung (1) zur Atmosphäre öffnende Ventileinrichtung, dadurch gekennzeichnet, daß die Bezugsdruckkammer (55) an die keine ständig geöffnete Entlüftungsdüse aufweisende Übertragkammer (40) angeschlossen ist.

2. Beschleuniger nach Anspruch 1, dadurch gekennzeichnet, daß das Absperrventil als gleichsinnig und wenigstens annähernd gleichzeitig öffnendes Doppelventil (34, 35, 36) mit im Schließzustand voneinander getrennten Ventildurchgängen (34, 36 bzw. 34, 35) von einem zwischen dem Absperrventil und dem Einlaßventil (10, 43) befindlichen Kanalabschnitt (37) zur Atmosphäre bzw. Übertragkammer (40) ausgebildet ist.

3. Beschleuniger nach Anspruch 2, dadurch gekennzeichnet, daß das Absperrventil eine mit zwei konzentrischen Ventilsitzen (35, 36) zusammenwirkende Ventildichtung (34) aufweist, und daß der dem größeren Ventilsitz (36) umgebende Raum (38), der Ringraum (39) zwischen den beiden Ventilsitzen (35 und 36) und der vom kleineren Ventilsitz (35) umschlossene Innenraum in beliebiger Zuordnung mit dem Kanalabschnitt (37), der Atmosphäre bzw. der Übertragkammer (40) verbunden sind.

4. Beschleuniger nach Anspruch 1, 2 oder 3, dadurch gekennzeichnet, daß ein zwischen dem Absperrventil (Doppelventil 34, 35, 36) und dem Einlaßventil (10, 43) befindlicher Kanalabschnitt (37) über eine Serienanordnung einer Düse (59) und eines Rückschlagventils (60) mit der Bezugsdruckkammer (55) verbunden ist.

5. Beschleuniger nach einem oder mehreren der vorstehenden Ansprüche, dadurch gekennzeichnet, daß das Kolbenglied (53) bei überwiegender Bezugsdruckbeaufschlagung ein erstes Ventil (Ventilsitz 61) öffnet, welches in eine eine Düse (63) aufweisende Verbindung von der Bezugsdruckkammer (55) zu einem von einem Ventilsitz (65) abgeschlossenen, ersten Raum (64) eingeordnet ist, und hubabhängig nachfolgend ein zweites Ventil (73, 74) öffnet, welches in eine eine weitere Düse (70) aufweisende Verbindung (71) von einem Hauptluftleitungsdruck führenden Raum, gegebenenfalls der Leitungskammer (54), zu einem zweiten Raum (68) eingeordnet ist, daß der zweite Raum (68) durch den Ventilsitz (65) abgetrennt an den ersten Raum (64) angrenzt, daß der Ventilsitz (65) mittels einer andererseits von einer Feder (66) belasteten Membrane (67) abdeckbar ist, und daß der zweite Raum (68) über eine dritte Düse (69) mit der Atmosphäre verbunden ist (Fig. 2).

6. Beschleuniger nach einem oder mehreren der Ansprüche 1 bis 4, gekennzeichnet durch die Kombination mit den insgesamt an sich bekannten Merkmalen, daß das Kolbenglied (53') mit einer Ventilhülse (79) verbunden ist, daß die Ventilhülse (79) bezugsdruckkammerseitig einen ersten, mit der Leitungskammer (54) verbundenen Innenraum (82) aufweist, in welchem sich eine Ventildichtung (83) befindet, welche einem ersten Ventil (83, 85) zugehört und welche federnd auf ein durch eine Stirnöffnung der Steuerhülse (79) abgedichtet verschieblich in den ersten Innenraum (82) ragendes, gehäusefestes Ventilrohr (85) aufsetzbar ist, dessen Bohrung (86) über eine erste Düse (87) mit der Atmosphäre verbunden ist, daß die Ventilhülse (79) leitungskammerseitig einen zweiten, über eine zweite Düse (89) mit der Bezugsdruckkammer (55) verbundenen Innenraum (88) aufweist, in welchem sich eine weitere, einem zweiten Ventil (90, 92) zugehörende Ventildichtung (90) befindet, welche federnd auf einen einen stirnseitigen Auslaß (91) der Steuerhülse (79) umgebenden Ventilsitz (92) aufsetzbar ist, wobei dieser Ventildichtung in der Ruhestellung mit Abstand ein durch den Auslaß (91) eingreifender, gehäusefester Anschlag (93) gegenübersteht, so daß das zweite Ventil nachfolgend zum ersten Ventil öffnet (Fig. 3).

7. Beschleuniger nach Anspruch 6, dadurch gekennzeichnet, daß in die Verbindung (Kanal 80) von der Leitungskammer (54) zum ersten Innenraum (82) ein in diesem Innenraum (82) angeordnetes, federbelastetes Rückschlagventil (81) eingeordnet ist, und daß von ersten Innenraum (82) eine Düsenbohrung (84) zur Bezugsdruckkammer (55) führt (Fig. 3).

8. Beschleuniger nach Anspruch 7, dadurch gekennzeichnet, daß in die Verbindung (Kanal 57) von der Übertragkammer (40) zur Bezugsdruckkammer (55) ein Rückschlagventil (95) eingeordnet ist (Fig. 3).

## Claims

1. Accelerator for control valves, in particular three-pressure control valves (3) of rail vehicle-compressed air brake installations, which have an initiating accelerator (30) with a transfer chamber (40) lowering the main air line pressure at the beginning of braking, with an inlet valve (10, 43), opening at the beginning of braking, located between the main air line (1) and the transfer chamber (40), if necessary with an outlet valve (48, 49) from the transfer chamber (40) to the atmosphere, open only in the release position of the control valve (3), and with a shut-off valve (double valve 34, 35, 36) between the transfer chamber (40) and the inlet valve (10, 43), closing after initiating of the control valve (3) and filling of the transfer chamber (40), and with a service brake accelerator (52, 52') including a piston member (53, 53') acted on by the pressure in a line chamber (54) connected to the main air line (1), in the opposite direction to the pressure in a reference pressure chamber (55), and a valve device coupled to the piston member (53, 53'), and with its predominant reference pressure load, directly or indirectly opening an air outlet from the main air line (1) to the atmosphere, characterised in that the reference pressure chamber (55) is connected to the transfer chamber (40) having no permanently open ventilation nozzle.

2. Accelerator according to claim 1, characterised in that the shut-off valve is constructed as a double valve (34, 35, 36) opening in the same direction and at least approximately at the same time, with valve passages (34, 36 or 34, 35), separated from one another in the closed state, from a channel section (37) located between the shut-off valve and the inlet valve (10, 43) to the atmosphere or transfer chamber (40).

3. Accelerator according to claim 2, characterised in that the shut-off valve has a valve seal (34) co-operating with two concentric valve seats (35, 36), and in that the chamber (38) surrounding the larger valve seat (36), the annulus (39) between the two valve seats (35 and 36) and the inner chamber enclosed by the smaller valve seat (35) are connected in random relationship to the channel section (37), the atmosphere or the transfer chamber (40).

4. Accelerator according to claim 1, 2 or 3, characterised in that a channel section (37) between the shut-off valve (double valve 34, 35, 36) and the inlet valve (10, 43) is connected by means of a series arrangement of a nozzle (59) and a non-return valve (60) to the reference pressure chamber (55).

5. Accelerator according to one or several of the above claims, characterised in that the piston member (53) with a predominant reference pressure load opens a first valve (valve seat 61), which is fitted into a connection, having a nozzle (63) from the reference pressure chamber (55) to a first chamber (64) closed by a valve seat (65) and, dependent on the lift, then opens a second valve (73, 74), which is fitted into a connection (71) having a further nozzle (70), from a chamber, if need be the line chamber (54), conveying main air line pressure, to a second chamber (68), in that the second chamber (68), separated by the valve seat (65), adjoins the first chamber (64), in that the valve seat (65) can be covered by means of a diaphragm (67) loaded on the other side by a spring (66), and in that the second chamber (68) is connected by means of a third nozzle (69) to the atmosphere (Fig. 2).

6. Accelerator according to one or several of claims 1 to 4, characterised by the combination with the features that are altogether known *per se,* in that the piston member (53') is connected to a valve sleeve (79), in that the valve sleeve (79) has on the reference pressure chamber side a first inner chamber (82) connected to the line chamber (54) in which there is a valve seal (83) which belongs to a first valve (83, 85) and which can be placed resiliently onto a housing-tight valve tube (85) which is sealed by a front opening of the control sleeve (79) and projects displaceably into the first inner chamber (82), the bore (86) of which tube is connected via a first nozzle (87) to the atmosphere, in that the valve sleeve (79) has on the line chamber side a second inner chamber (88) connected to the reference pressure chamber (55) via a second nozzle (89), in which inner chamber there is a further valve seal (90) belonging to a second valve (90, 92), which valve seal can be placed resiliently onto a valve seat (92) surrounding a front outlet (91) of the control sleeve (79), whereby a housing-tight stop (93) engaging through the outlet (91) with clearance is located opposite this valve seal in the rest position, so that the second valve opens subsequently to the first valve (Fig. 3).

7. Accelerator according to claim 6, characterised in that fitted into the connection (channel 80) from the line chamber (54) to the first inner chamber (82) there is a spring-loaded non-return valve (81) arranged in this inner chamber (82), and in that a nozzle bore (84) leads from the first inner chamber (82) to the reference pressure chamber (55) (Fig. 3).

8. Accelerator according to claim 7, characterised in that there is fitted into the connection (channel 57) from the transfer chamber (40) to the reference pressure chamber (55) a non-return valve (95) (Fig. 3).

**Revendications**

1. Accélérateur pour des valves de commande, en particulier pour des triples valves (3) d'installations de freinage à air comprimé pour des véhicules sur rails, comportant un accélérateur de déclenchement (30) abaissant au début du freinage la pression dans la conduite principale et présentant une chambre de relais (40), avec une soupape d'admission (10, 43) qui s'ouvre au début du freinage et disposée entre la conduite principale (1) et la chambre de relais (40), éventuellement avec une soupape d'évacuation (48, 49) menant de la chambre de relais (40) à l'atmosphère et ne s'ouvrant que dans la position de desserrage de la triple valve (3) et avec une soupape d'arrêt (soupape double 34, 35, 36) qui se ferme après le déclenchement de la valve de commande (3) et le remplissage de la chambre de relais (40) et qui se trouve entre la chambre de relais (40) et la soupape d'admission (10, 43), et avec un accélérateur de freinage de service (52, 52') comprenant un élément de piston (53, 53') chargé par la pression qui règne dans la chambre de conduite (54) reliée à la conduite principale (1) à l'encontre de la pression qui règne dans une chambre à pression de référence (55), ainsi qu'un dispositif de soupape accouplé à l'élément de piston (53, 53') ouvrant directement ou indirectement une évacuation de l'air de la conduite principale (1) dans l'atmosphère lorsque ledit élément de piston est chargé de façon prédominante par la pression de référence, caractérisé par le fait que la chambre à pression de référence (55) est reliée à la chambre de relais (40) qui comporte une tuyère de désaération qui n'est pas ouverte en permanence.

2. Accélérateur selon la revendication 1, caractérisé par le fait que la soupape d'arrêt est réalisée sous la forme d'une soupape double (34, 35, 36) qui s'ouvre dans le même sens et au moins approximativement en même temps, et comportant, à l'état fermé, des passages de soupapes (34, 36 et 34, 35) séparés entre eux et menant d'une section de canal (37) qui se trouve entre la soupape d'arrêt et la soupape d'admission (10, 43), à l'atmosphère ou à la chambre de relais (40).

3. Accélérateur selon la revendication 2, caractérisé par le fait que la soupape d'arrêt comporte un moyen d'étanchéité de soupape (34) coagissant avec deux sièges de soupape concentriques (35, 36), et que la chambre (38) qui entoure le plus grand siège de soupape (36), la chambre annulaire (39) qui est située entre les deux sièges de soupapes (35 et 36) et la chambre intérieure qui est délimitée par le plus petit siège de soupape (35) sont reliées, suivant une coordination quelconque, avec la section de canal (37) l'atmosphère et la chambre de relais (40).

4. Accélérateur selon la revendication 1, 2 ou 3, caractérisé par le fait qu'une section de canal (37) qui se trouve entre la soupape d'arrêt (soupape double 34, 35, 36) et la soupape d'admission (10, 43) est reliée à la chambre à pression de référence (55), par l'intermédiaire d'un agencement série constitué par une tuyère (59) et une soupape de retenue (60).

5. Accélérateur selon l'une ou plusieurs des revendications précédentes, caractérisé par le fait que l'élément de piston (53), lorsqu'il est chargé de façon prédominante par la pression de référence, ouvre une première soupape (siège de soupape 61) qui est disposée dans une liaison, comportant une tuyère (63), et menant de la chambre à pression de référence (55) à une première chambre (64) qui est délimitée par un siège de soupape (65), et ouvre ensuite, en fonction de la course, une seconde soupape (73, 74) qui est disposée dans une liaison (71), qui comporte une seconde tuyère (70), et qui mène d'une chambre, éventuellement la chambre de relais (54), dans laquelle règne la pression de la conduite principale, à une seconde chambre (68), que la seconde chambre (68) jouxte la première chambre (64) en en étant séparée par le siège de soupape (65), que le siège de soupape (65) est susceptible d'être obturé à l'aide d'une membrane (67) qui est chargée sur son autre face par un ressort (66), et que la seconde chambre (68) est reliée à l'atmosphère par l'intermédiaire d'une troisième tuyère (69) (figure 2).

6. Accélérateur selon l'une ou plusieurs des revendications 1 à 4, caractérisé par la combinaison des moyens connus en eux-mêmes, et qui consiste en ce que l'élément de piston (53') est relié à une douille de soupape (79), que la douille de soupape (79) comporte, du côté de la chambre à pression de référence, une première chambre intérieure qui est reliée à la chambre de conduite (54) et dans laquelle se trouve un moyen d'étanchéité de soupape (83) qui appartient à une première soupape (83, 85) et qui est susceptible d'être appliqué élastiquement sur un tube de soupape (85) qui est solidaire du carter et qui pénètre, avec étanchéité et possibilité de déplacement, dans la première chambre intérieure (83), en passant par une ouverture frontale de la douille de commande (79), tube de soupape dont le perçage (86) est relié, par l'intermédiaire de la première tuyère (87) à l'atmosphère, que la douille de soupape (79) comporte, du côté de la chambre de conduite, une seconde chambre intérieure (88), reliée par l'intermédiaire d'une seconde tuyère (89) à la chambre à pression de référence (55), chambre intérieure (88) dans laquelle se trouve un second moyen d'étanchéité de soupape (90) appartenant à une seconde soupape (90, 92), lequel moyen d'étanchéité est susceptible de s'appliquer élastiquement sur un siège de soupape (92) qui entoure une évacuation frontale (91) de la douille de commande (79), une butée (93) solidaire du carter et passant par l'évacuation (91) se situant, dans la position de repos, à une certaine distance dudit moyen d'étanchéité, en sorte que la seconde soupape s'ouvre à la suite de la première soupape (figure 3).

7. Accélérateur selon la revendication 6, caractérisé par le fait que dans la liaison (canal 80) menant de la chambre de conduite (54) à la première chambre intérieure (82) est disposée une soupape de retenue (81) qui est chargée par un ressort et disposée dans cette chambre intérieure (82), et que de la première chambre intérieure (82) un perçage de tuyère (84) mène à la chambre à pression de référence (55) (figure 3).

8. Accélérateur selon la revendication 7, caractérisé par le fait que dans la liaison (canal 57) menant de la chambre de relais (40) à la chambre à pression de référence (55), est disposée une soupape de retenue (95) (figure 3).

Fig.1

0070 405

Fig. 2

Fig. 3

0 070 405